# EUROPÄISCHE PATENTSCHRIFT

(11) **EP 1 885 586 B1**
(45) Veröffentlichungstag und Bekanntmachung des Hinweises auf die Patenterteilung: **10.08.2011**
(21) Anmeldenummer: 06743279.9
(22) Anmeldetag: 11.04.2006
(51) Int. Cl.: B60T 8/172, G01C 21/28

(54) **BESTIMMUNG DES AKTUELLEN GIERWINKELS UND DES AKTUELLEN SCHWIMMWINKELS EINES LANDFAHRZEUGS**
DETERMINATION OF THE ACTUAL YAW ANGLE AND THE ACTUAL SLIP ANGLE OF A LAND VEHICLE
DETERMINATION DE L'ANGLE DE LACET ACTUEL ET DE L'ANGLE DE DERIVE ACTUEL D'UN VEHICULE ROUTIER

(30) Priorität: 31.05.2005 DE 102005024875
(43) Veröffentlichungstag der Anmeldung: 13.02.2008
(73) Patentinhaber: Continental Automotive GmbH, 30165 Hannover (DE)
(72) Erfinder: JUNG, Andreas, 2332ET Leiden (NL); MAYER, Andreas, 93049 Regensburg (DE); TRIPPLER, Peter, 61267 Neu Anspach (DE)
(86) Internationale Anmeldenummer: PCT/EP2006/061523
(87) Internationale Veröffentlichungsnummer: WO 2006/128758

(56) Entgegenhaltungen:
- DE-A1- 3 830 747
- DE-A1- 10 247 991
- US-A1- 2002 198 655
- US-A1- 2003 040 849

## Beschreibung

Die Erfindung betrifft ein Verfahren und eine Vorrichtung zur Bestimmung des aktuellen Gierwinkels und des aktuellen Schwimmwinkels eines Landfahrzeugs.

Der Gierwinkel ψ ist definiert als der Winkel zwischen der Längsachse des Fahrzeuges und einer Achse parallel zur Erdoberfläche in einem erdfesten Koordinatensystem.

Der Schwimmwinkel β ist der Winkel zwischen dem Geschwindigkeitsvektor eines mit dem Fahrzeug fest verbundenen Punktes (i. a. des Fahrzeugschwerpunktes) und der Längsachse des Fahrzeuges. Längs- und Querneigung werden durch den Nickwinkel θ und Wankwinkel ϕ des Fahrzeuges erfasst. Wank-, Nick- und Gierwinkel sind gemäß DIN 70000 definiert.

Die aktuelle horizontale Ausrichtung des Fahrzeuges, die durch den Gierwinkel erfasst wird, kann für die schnelle Wegbestimmung bei der Fahrzeug-Navigation verwendet werden, ist in diesem Zusammenhang jedoch vor allem als Hilfsgröße bei der Schwimmwinkelbestimmung wichtig. Der Schwimmwinkel gibt Auskunft über die Fahrzeugorientierung gegenüber der Bewegungsrichtung und stellt sozusagen ein Maß für das seitliche Wegrutschen des Fahrzeugs dar. Tritt seitliches Wegrutschen des Fahrzeugs auf, so verlässt das Fahrzeug in der Regel seinen stabilen Fahrzustand und eine Gefahrensituation ist eingetreten, die den Fahrzeuglenker möglicherweise überfordert.

Durch die möglichst genaue Kenntnis des Gier- und Schwimmwinkels können also solche Gefahrensituationen schnell erkannt werden, was wiederum ein schnelles, elektronisch geregeltes Eingreifen in die Fahrsituation mit Hilfe von elektrisch ansteuerbaren Aktuatoren zum Beispiel des Antriebsstranges, des Bremssystems, der Lenkung, der Federung/Dämpfung etc. und damit die automatisierte Stabilisierung des Fahrzeugs ermöglicht. Dies stellt einen wesentlichen Beitrag zur Fahrsicherheit in Grenz- und Gefahrensituationen dar.

Der Gierwinkel eines Fahrzeuges wird herkömmlich bei Vorhandensein eines Gierratensensors durch Integration des Gierratensignals bestimmt. Solche Gierratensensoren (Gyroskope) lassen sich heute mit fahrzeugtauglichen Eigenschaften zu vergleichsweise geringen Kosten herstellen und sind in Fahrzeugen mit elektronischen Stabilitätsprogrammen, ESP, oder Navigationssystemen bereits verfügbar.

Probleme bei dieser Bestimmung des Gierwinkels ergeben sich häufig durch zum Beispiel temperaturabhängige Wertabweichungen (Offsets) der Gierratehsignale, die einen mindestes linear mit der Zeit anwachsenden Fehler bei der Integration des Gierwinkels zur Folge haben. Darüber hinaus führen zeitabhängige Drifts des Offsets, sowie Verfälschung der Ergebnisse durch Fahrbahnneigungen zum zusätzlichen Anwachsen des Integrationsfehlers. Die Abweichung des berechneten Gierwinkels zum tatsächlichen Gierwinkel nimmt also kontinuierlich zu. Dies kann zu Fehlinterpretationen der aktuellen Fahrsituation und im schlimmsten Falle gar zu Fehleingriffen in die Fahrzeugsteuerung führen.

Alternativ lässt sich der Gierwinkel durch Auswertung der bei Fahrzeugen mit Antiblockier-Bremssystem, ABS, stets vorhanden Raddrehzahlsensoren und, falls vorhanden, eines Lenkwinkelsensors oder Lenkradwinkelsensors gewinnen. Hauptproblem dieser Methode ist der Radschlupf, insbesondere der Seitenschlupf, Reifeneigenschaften wie insbesondere der dynamische Radradius müssen bekannt sein und es tritt auch hier ein anwachsender Fehler durch Integrations-Offsets auf.

Zur Gierwinkelbestimmung lässt sich auch ein satellitengestütztes Positionierungssystem (z.B. GPS) nutzen, wie es in den Dokumenten US 5983161 und US 62757773 offenbart ist. Allerdings werden hierzu entweder mindestens zwei Antennen an jeweils unterschiedlichen, möglichst weit entfernt liegenden Punkten des Fahrzeuges benötigt. Im Falle von zwei oder mehr GPS-Antennen in einem Fahrzeug lässt sich die Orientierung de Fahrzeugs auf der Fahrbahn aus den relativen Positionen der Antennen im erdfesten System ermitteln. Dabei setzt die absolute Genauigkeit der Positionsbestimmung Grenzen und darüber hinaus ist eine solche Lösung aus Kostengründen wenig praktikabel.

Eine weitere Möglichkeit besteht darin, dass man den vom GPS-Empfänger gelieferten Winkel des Geschwindigkeitsvektors des Fahrzeuges zu einer erdfesten Achse näherungsweise dem Gierwinkel gleich setzt. Dies ist jedoch bei größer werdenden Schwimmwinkeln, also gerade im Gefahrenfall, nicht mehr möglich.

Die Bestimmung des Schwimmwinkels erfolgt gewöhnlich über die auf die einzelnen Räder wirkenden Kräfte, insbesondere die Seitenkräfte. Mit der üblicherweise in heutigen Mittelklassewagen vorhandenen Fahrzustands-Sensorik lassen sich die Seitenkräfte nur ungenau bestimmen, und diese Methode ist lediglich bei kleinen Schwimmwinkeln (<1-2°) anwendbar. Bei großen Schwimmwinkeln werden zur Schwimmwinkelbestimmung gewöhnlich die Querbeschleunigung, die Gierrate und die Geschwindigkeit des Fahrzeugs herangezogen. Dabei ist eine Integration über die im Allgemeinen kleine Differenz zweier großer Zahlen nötig. Wertabweichungen (Offsets) von Querbeschleunigungs- und Gierratensensor sowie die Verfälschung der Querbeschleunigungswerte durch Querneigungen der Fahrbahn können hierbei zu großen Fehlern führen. Darüber hinaus führt das vorhandene Sensorrauschen zusätzlich zu anwachsenden Integrationsfehlern bei der Ermittlung des Schwimmwinkels.

In der Anmeldeschrift US 2002/0198655 A1 wird die Verwendung von einem satellitengestützten Positionsbestimmungssystem zur Schwimmwinkelbestimmung vorgeschlagen. Der Schwimmwinkel wird als Differenz zwischen der Richtung des Geschwindigkeitsvektors des Fahrzeuges und der Ausrichtung der Längsachse des Fahrzeuges, also des Gierwinkels, ermittelt. Dieses Verfahren ist allerdings nur praktikabel, wenn der Gierwinkel des Fahrzeuges mit genügender Präzision bestimmt werden kann. Bei Vorhandensein nur einer GPS-Antenne und keiner zusätzlichen Umgebungssensorik müsste hierzu auf integrierende Verfahren zurückgegriffen werden, die, wie bereits besprochen zu Wertabweichungen führen.

In der Offenlegungsschrift DE 10327695 A1 wird vorgeschlagen, den Schwimmwinkel durch ein Spurerkennungssystem zu bestimmen. Die hierzu notwendige Sensorik ist kostspielig und daher nur in wenigen Fahrzeugen vorhanden.

Aus der DE 38 30 747 A1 sind ein Verfahren und eine Vorrichtung zur automatischen Führung der Längs- und Querbewegungen eines Fahrzeugs unter Berücksichtigung des Gierwinkels bekannt.

Die US 2003/0040849 A1 beschreibt eine Methode und ein System zur Abschätzung einer Trajektorie eines mit einem elektronischen Stabilitätsprogramm (ESP) ausgerüsteten Fahrzeugs unter Berücksichtigung des Gierwinkels.

Die DE 102 47 991 A1 offenbart ein Verfahren, bei dem durch einen Gierratensensor die Gierrate des Kraftfahrzeugs ermittelt wird. Zudem wird die Richtung der Geschwindigkeit insbesondere im Schwerpunkt des Kraftfahrzeugs durch eine Frequenzanalyse der durch einen im Kraftfahrzeug befindlichen GPS-Empfänger empfangenen Signale ermittelt und abhängig wenigstens von der Gierrate und der Richtung der Geschwindigkeit des Kraftfahrzeugs der Schwimmwinkel ermittelt. Zudem offenbart die genannte Druckschrift eine Vorrichtung zur Ermittlung des Schwimmwinkels eines Kraftfahrzeugs.

Bei den beschriebenen Lösungen besteht der Nachteil, dass die erforderliche Genauigkeit bei der Ermittlung des Gier- und Schwimmwinkels auf Dauer nicht gewährleistet ist. Durch den Einsatz zusätzlicher erforderlicher Sensorsysteme sind die zur Verfügung stehenden Systeme teuer und somit nicht zur Anwendung in einer breiten Fahrzeugpalette auch in unteren Preiskategorien geeignet.

Der vorliegenden Erfindung liegt daher die Aufgabe zugrunde, ein Verfahren und eine Vorrichtung anzugeben, die gleichermaßen eine genaue Bestimmung des Gierwinkels bei kleinem Schwimmwinkel als auch eine ausreichend genaue Bestimmung großer Schwimmwinkel ermöglichen. Eine weitere Aufgabe besteht darin, die Bestimmung von Gier- und Schwimmwinkel mit einem kostengünstigen System auf Basis ohnehin im Fahrzeug vorhandener Sensoren durchzuführen. Dadurch soll letztlich die Fahrsicherheit erhöht und für eine breite Anwenderschicht erschwinglich werden.

Diese Aufgabe wird durch ein Verfahren mit den Merkmalen gemäß Patentanspruch 1 sowie durch eine Vorrichtung mit den Merkmalen gemäß Patentanspruch 9 gelöst. Vorteilhafte Aus- und Weiterbildungen, welche einzeln oder in Kombination miteinander eingesetzt werden können, sind Gegenstand der abhängigen Ansprüche.

Das erfindungsgemäße Verfahren zur Bestimmung des aktuellen Gierwinkels und des aktuellen Schwimmwinkels eines Landfahrzeugs nutzt eine Fahrzustands-Sensorik, einen Gierratensensor sowie ein Positions-Bestimmungssystems die im Landfahrzeug vorhanden sind. Das Positions-Bestimmungssystems kann sowohl ein Satellitensender gestütztes, als auch ein mit terrestrischen Sendern arbeitendes oder auch ein aus beiden Möglichkeiten kombiniertes Positions-Bestimmungssystems sein.

Unter Heranziehung der von diesen Systemen gelieferten Daten erfolgt zunächst die Ermittlung mindestens einer Schwimmwinkelkenngröße des Landfahrzeugs mit Hilfe von Sensor-Werten, die von der fahrzeuginternen Fahrzustands-Sensorik und/oder dem Gierratensensor bereitgestellt werden.

Weiterhin wird ein aktueller Geschwindigkeitsvektor-Winkel ermittelt, der als Winkel zwischen einem, mit Werten des Positions-Bestimmungssystems ermittelten, Geschwindigkeitsvektor des Landfahrzeugs und einer erdfesten Achse ermittelt wird.

Mindestens eine ermittelte Schwimmwinkelkenngröße wird mit mindestens einem festgelegten Kenngrößen-Grenzwert verglichen.

Unterschreitet die Schwimmwinkelkenngröße den Kenngrößen-Grenzwert, so wird der aktuelle Gierwinkel auf den aktuellen Geschwindigkeitsvektor-Winkel abgeglichen, wobei der aktuelle Schwimmwinkel mit Hilfe der Sensor-Werte, die von der fahrzeuginternen Fahrzustands-Sensorik und/oder dem Gierratensensor bereitgestellt werden, ermittelt wird. Dabei wird der Schwimmwinkel, sofern er sich auf eine anderen Punkt des Aufbaus des Landfahrzeugs bezieht auf den Schwerpunkt des Fahrzeugs umgerechnet.

Überschreitet die Schwimmwinkelkenngröße den Kenngrößen-Grenzwertes, so wird der aktuelle Gierwinkel mit Hilfe von Sensor-Werten, die von dem Gierratensensor durch laufende Werte-Integration auf Basis eines vorhergehenden Abgleichs auf den Geschwindigkeitsvektor-Winkel bereitgestellt werden, ermittelt und der Schwimmwinkel wird als Differenz zwischen dem so ermittelten Gierwinkel des Landfahrzeugs und dem aktuellen Geschwindigkeitsvektor-Winkel ermittelt.

Die erfindungsgemäße Vorrichtung zur Berechnung von Fahrdynamikdaten eines Landfahrzeugs ist eingerichtet zur Erfassung und Aufbereitung von Daten einer im Fahrzeug vorhandenen Fahrzustands-Sensorik, eines Gierratensensors sowie eines Positions-Bestimmungssystems und mit einer Recheneinheit die Funktionseinheiten zur Bestimmung des aktuellen Gierwinkels und des aktuellen Schwimmwinkels eines Landfahrzeugs gemäß dem beschriebenen Verfahren aufweist.

Die Erfindung erlaubt es, auch ohne zusätzliche Sensorik wie z. B. einem zweiten Positions-Bestimmungssystem oder einer Fahrbahn-Erkennung, im Fahrzeug den Schwimmwinkel zuverlässig und mit ausreichender Genauigkeit zu ermitteln, wenn dieser über mehrere Sekunden große Werte annimmt. Gleichzeitig wird der Gierwinkel des Fahrzeuges über lange Zeitintervalle sicher bestimmt und die in den integrierenden Verfahren auftretenden Wertabweichungen in kurzen Zeitintervallen abgeglichen. Darüber hinaus lassen sich mit dem Verfahren die Inertialsensoren, insbesondere der Gierratensensor, auf Funktionstüchtigkeit überwachen.

In vorteilhafter Weise werden die einzelnen Schritte im Ablauf der Ermittlung der aktuellen Gier- und Schwimmwinkel in festgelegten oder zum Beispiel in Abhängigkeit von der aktuellen Fahrsituation veränderlichen Zeitintervallen (ZI) wiederholt. Dadurch kann die Rechenkapazität der erfindungsgemäßen Vorrichtung bedarfsgerecht genutzt werden und bei drohenden Gefahrensituationen die Genauigkeit der Wertermittlung durch Verkürzung der Berechnungsintervalle erhöht werden.

In weiter vorteilhafter Ausprägung ist sowohl ein statischer Kenngrößen-Grenzwert als auch ein dynamischer Kenngrößen-Grenzwert festgelegt. Der statische Kenngrößen-Grenzwert stellt dabei eine Wertgrenze in bestimmter Höhe dar. Der dynamische Kenngrößen-Grenzwert stellt eine Wertgrenze dar, die das Anwachsen des Schwimmwinkels kennzeichnet. Dies hat den Vorteil, dass zum einen bei langsamem Überschreiten des statischen Kenngrößen-Grenzwertes zuverlässig eine Entscheidung getroffen werden kann. Zum Anderen kann durch Erkennen einer schnellen Änderung, als durch Überschreiten des dynamischen Kenngrößen-Grenzwertes unabhängig von der absoluten Höhe des Wertes das Überschreiten des statischen Kenngrößen-Grenzwertes quasi vorweg genommen werden und eine schnelle Reaktion ggf. noch vor Eintreten des Grenzfalles ermöglicht werden.

Mit Hilfe der Fahrzustands-Sensorik kann zumindest je ein Wert zur Bestimmung zumindest einer Raddrehzahl und/oder einer Fahrzeug-Querbeschleunigung und/oder einer Fahrzeuglängsbeschleunigung ermittelt werden. Diese Werte können vorteilhaft zur Errechnung bestimmter Schwimmwinkelkenngrößen herangezogen werden. Weiterhin kann mit Hilfe der Fahrzustands-Sensorik zumindest je ein Wert zur Bestimmung eines Antriebsmomentes und/oder eines Bremsmomentes zumindest eines Rades des Landfahrzeugs ermittelt und ebenfalls oder wahlweise zur Errechnung bestimmter Schwimmwinkelkenngrößen herangezogen werden. Dies ist von besonderem Vorteil, wenn die entsprechenden Sensoren zum Beispiel für ein Antiblockier-Bremssystem ein Feststellbremssystem ein Navigationssystem oder ähnliche Funktionseinheiten ohnedies vorhanden sind. Mit Hilfe eines speziellen Rechenalgorithmus können, aus den mit der Fahrzustands-Sensorik (FZS) ermittelten Werten, Kenngrößen für den Querschlupf und/oder den Längsschlupf sowie für die zumindest auf ein Rad wirkende Querkraft bzw. Längskraft ermittelt werden. Diese Kenngrößen können vorteilhaft als Grundlage zur Berechnung für die mindestens eine Schwimmwinkelkenngröße herangezogen werden.

Zusätzliche Genauigkeit bei der Ermittlung des Gier- und des Schwimmwinkels lässt sich erzielen, wenn eine Offset-Korrektur für mindestens ein Beschleunigungssignal der Fahrzustands-Sensorik mit Hilfe eines Filter-Algorithmus, insbesondere eines Kalmann-Filters durchgeführt wird. Dadurch lassen sich Wertabweichungen die zum Beispiel durch Fahrbahnunebenheiten oder Fahrbahnneigungen hervorgerufen werden reduzieren und somit die Genauigkeit der Berechnungen insgesamt steigern.

Zur weiteren Steigerung der Genauigkeit der ermittelten Daten können zusätzliche Umgebungsinformationen zur Offset-Korrektur mindestens eines Beschleunigungssignals herangezogen werden. Solche Umgebungsinformationen können beispielsweise aus Kartendaten der in einem Navigationssystem hinterlegten Straßenkarten stammen, durch örtliche Informationsquellen (lokale Sender) in das System übertragen werden oder von vorhandenen Radarsystemen, Kameras etc. bereitgestellt werden.

Mit anderen Worten beschrieben beinhaltet die Erfindung einen Algorithmus, der das Auftreten großer Schwimmwinkel (z. B.>3°) erkennt. Der Algorithmus verwendet als Inputdaten Signale der Fahrzustands-Sensorik, die in Kraftfahrzeugen die mit Stabilitätsprogrammen ausgestattet sind bereits vorhanden ist, nämlich beispielsweise Raddrehzahlen, Gierrate und Querbeschleunigung. Zusätzlich können die Antriebsmomente der angetriebenen Räder und die Bremsmomente aller Räder verwendet werden. Optional wird auch die Längsbeschleunigung des Fahrzeugs verwendet. Mit Hilfe dieser Größen können der Längsschlupf aller Räder, der Querschlupf aller Räder sowie die auf jedes Rad wirkende Längs- und Querkraft berechnet werden. Aus diesen Größen können wiederum Kenngrößen berechnet werden, an Hand derer eine Entscheidung darüber getroffen wird, ob der Schwimmwinkel bereits oberhalb eines definierten Grenzwertes liegt oder im Begriff ist, über einen definierten Grenzwert hinauszuwachsen. In diesem Falle wird ein Flag auf den Wert eins gesetzt. Anderenfalls hat das Flag den Wert null.

Mit Hilfe eines Kalman-Filters können Offsets der Beschleunigungssensoren, insbesondere durch graduelle Fahrbahnneigungen, korrigiert oder zumindest verbessert werden. Zusätzlich lassen sich auch Karteninformationen eines Navigationsgerätes sowie mögliche aktuelle Fahrbahnzustandsinformationen (z.B.. über Baustellen mit starken Neigungen) nutzen.

Hat das Flag den Wert null, so wird der vom Navigations-Empfänger gelieferte Winkel zwischen dem Geschwindigkeitsvektor des Fahrzeuges und einer erdfesten Achse in Fahrbahnebene mit dem Gierwinkel gleichgesetzt. Auf diese Weise wird der Integrations-Offset abgeglichen.

Hat das Flag den Wert eins, so wird der Gierwinkel des Fahrzeugs durch Integration des Gierratensensorsignals bestimmt. Da das Flag nur über kurze Zeitintervalle (Gefahrensituation) den Wert eins hat (<20 Sekunden) und die Gierwinkelintegration zuvor mit dem Geschwindigkeitsvektorwinkel abgeglichen wurde, ist diese Art der Gierwinkelbestimmung in diesem Zeitintervall sehr präzise. Der Schwimmwinkel wird in diesem Fall als Differenz zwischen dem vom Navigations-Empfänger gelieferten Winkel und dem Gierwinkel bestimmt.

Zusammengefasst stellt sich die Erfindung so dar, dass mit Hilfe einer Fahrzustands-Sensorik, einem Gierratensensor sowie eines Positions-Bestimmungssystems zunächst eine Schwimmwinkelkenngröße ermittelt wird. Bleibt die Schwimmwinkelkenngröße unter dem Grenzwert, so wird der aktuelle Gierwinkel auf den aktuellen, mit Hilfe des Positions-Bestimmungssystems ermittelten Geschwindigkeitsvektorwinkel abgeglichen. Überschreitet die Schwimmwinkelkenngröße einen bestimmten Grenzwert, so wird der aktuelle Gierwinkel mit Hilfe von Sensor-Werten vom Gierratensensor durch laufende Werte-Integration ermittelt und der Schwimmwinkel als Differenz zwischen Gierwinkel und Geschwindigkeitsvektorwinkel berechnet.

Ausführungsbeispiele der Erfindung werden im Folgenden anhand der Darstellungen in der Zeichnung näher erläutert.

Es zeigen:
- Fig. 1: eine vereinfachte schematische Darstellung eines Land- fahrzeuges mit Darstellung der relevanten Winkel;
- Fig. 2: ein vereinfachtes Flussdiagramm zur Darstellung des Verfahrensablaufes eines erfindungsgemäßen Verfahrens; und
- Fig. 3: eine Schemadarstellung einer erfindungsgemäßen Vor- richtung zur Berechnung von Fahrdynamikdaten.

Funktions- und Benennungsgleiche Teile sind in den Figuren mit gleichen Bezugszeichen versehen.

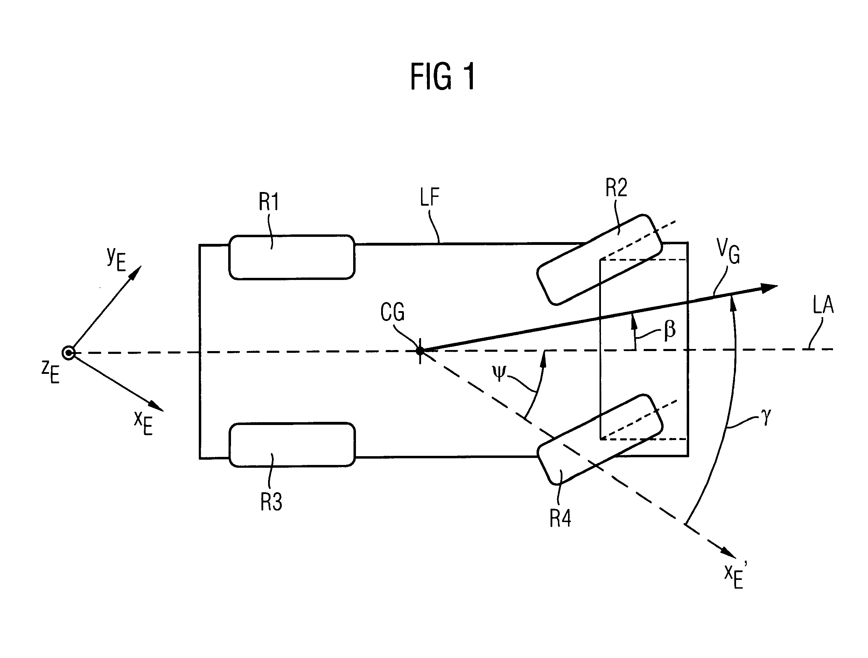

Die vereinfachte schematische Darstellung in Fig. 1 zeigt ein Landfahrzeug LF in groben Umrissen mit zwei nicht lenkbaren Rädern (Hinterachse) R1 und R3 und zwei lenkbaren Rädern (Vorderachse) R2 und R4. Weiterhin sind die Fahrzeuglängsachse LA und der Fahrzeugschwerpunkt CG dargestellt. Das Fahrzeug ist dargestellt in Draufsicht in Relation zu einem erdfesten Koordinatensystem mit den Hauptachsen X_{E}, Y_{E} und Z_{E}, wobei die Hauptachsen X_{E} und Y_{E} eine Ebene parallel zur Erdoberfläche, auf der sich das Fahrzeug bewegt aufspannen und die dritte Hauptachse Z_{E} aus der Betrachtungsebene heraus, dem Betrachter entgegen gerichtet ist. Die Fahrzeugebene ist dabei parallel zur Erdoberfläche (Ebene X_{E}/Y_{E}) ausgerichtet, der Nickwinkel θ und Wankwinkel ϕ des Fahrzeuges sind somit zu Null gesetzt. Der eingezeichnete aktuelle Gierwinkel ψ bezogen auf den Fahrzeugschwerpunkt CG ist somit der Winkel zwischen der parallel zur erdfesten Hauptachse X_{E} durch den Fahrzeugschwerpunkt CG gelegten Hilfs-Hauptachse X_{E}' und der Fahrzeuglängsachse LA.

Der ebenfalls vom Schwerpunkt CG des Fahrzeugs LF ausgehende aktuelle Geschwindigkeitsvektor V_{G} gibt Größe und Richtung der aktuellen Fahrzeuggeschwindigkeit bezogen auf den Fahrzeugschwerpunkt CG an. Der aktuelle Schwimmwinkel β ergibt sich dabei als Winkel zwischen der Fahrzeuglängsachse LA und dem Geschwindigkeitsvektor V_{G}. Der aktuelle Geschwindigkeitsvektor-Winkel γ ist der Winkel zwischen der Hilfs-Hauptachse X_{E}' und dem Geschwindigkeitsvektor V_{G}. Aus der Darstellung wird deutlich, dass bei verschwindendem Schwimmwinkel β, der Gierwinkel ψ und der Geschwindigkeitsvektor-Winkel γ übereinstimmen.

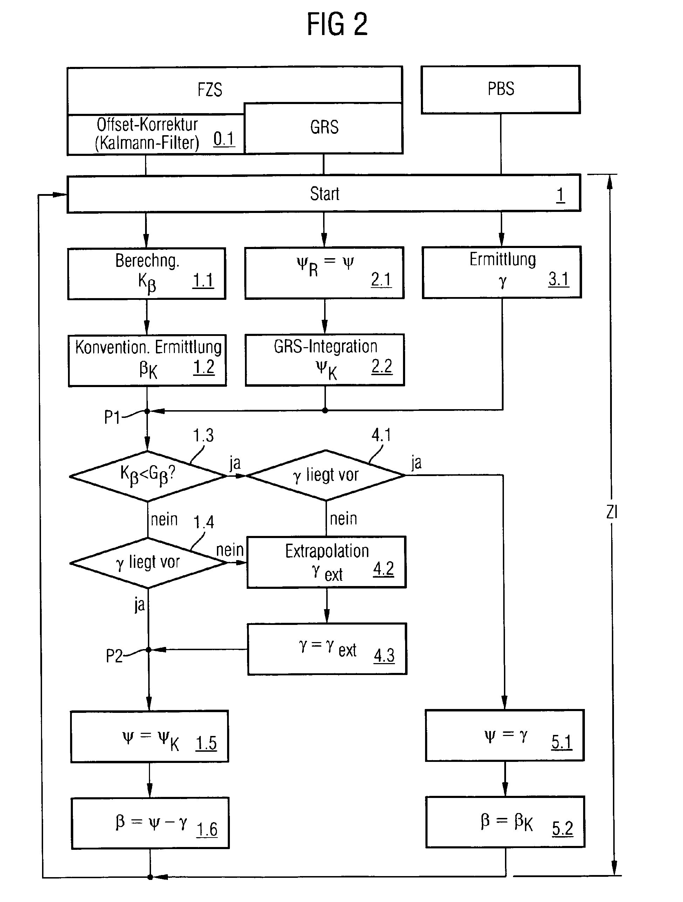

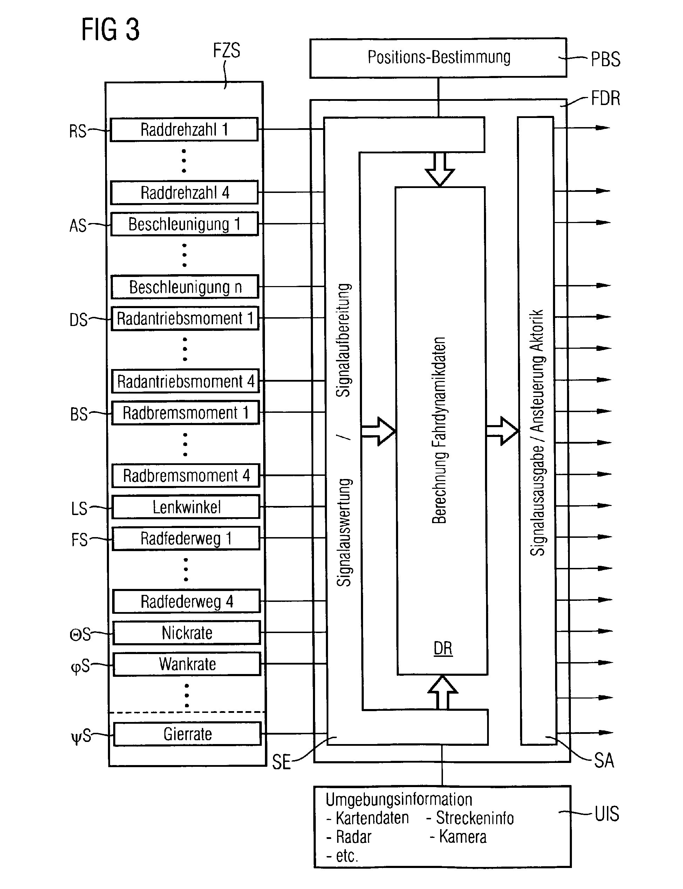

In Fig. 2 ist der Ablauf eines erfindungsgemäßen Verfahrens in Form eines Flussdiagramms dargestellt. Die erforderlichen Daten und Signale werden dabei von den Funktionseinheiten Fahrzustands-Sensorik FZS, Gierratensensor GRS und Positions-bestimmungssystem PBS zur Verfügung gestellt. Dabei kann der Gierratensensor GRS ein integraler Bestandteil der Fahrzustands-Sensorik FZS, wie dargestellt, oder auch eine eigenständige Sensoreinheit oder ein Bestandteil der Vorrichtung zur Berechnung von Fahrdynamikdaten des Landfahrzeugs (nicht dargestellt) sein. Im vorgelagerten Ablaufschritt 0.1, der im vorliegenden Fall noch innerhalb der Fahrzustands-Sensorik FZS durchgeführt wird, findet zunächst eine Offset-Korrektur der benötigten Sensorwerte statt. Dies kann erfolgen mit Hilfe von Filterprogrammen wie zum Beispiel einem Kalmann-Filter und unter Zuhilfenahme weiterer Umgebungsinformationen wie zum Beispiel Kartendaten aus dem Navigationssystem, Radarmessungen oder Kamerabilder einer Abstandsmessvorrichtung oder eines Spurhalte-Assistenzsystems etc. Diese Offset-Korrektur kann selbstverständlich auch innerhalb der Vorrichtung zur Berechnung von Fahrdynamikdaten (siehe dazu auch Fig. 3) im Rahmen einer Signalauswertung und Signalaufbereitung erfolgen.

Im ersten Ablaufschritt 1 wird der Verfahrensablauf gestartet. Es folgen dann in zeitlich parallelem Ablauf die Schritten 1.1, 2.1 und 3.1. Im Folgenden schließen sich an die Schritte 1.1 und 2.1 die Schritte 1.2 bzw. 2.2 an.

In Schritt 1.1 wird die Berechnung der Schwimmwinkelkenngrößen K_{β} durchgeführt. Dies erfolgt mit Hilfe eines Algorithmus der als Inputdaten-Signale der Fahrzustands-Sensorik FZS verwendet. Auf Basis dieser Schwimmwinkelkenngrößen K_{β} wird im darauf folgenden Schritt 1.2 eine konventionelle Ermittlung/Berechnung des aktuellen Schwimmwinkels durchgeführt.

Im Schritt 2.1 wird als Ausgangspunkt für die im Schritt 2.2 folgende konventionelle Gierwinkelbestimmung ein Referenz-Gierwinkel ψ_{R} vorgegeben. Dieser Referenz-Gierwinkel ψ_{R} wird mit dem zuletzt im zeitlich vorhergehenden Verfahrensablauf ermittelten aktuellen Gierwinkel ψ abgeglichen, also auf den aktualisierten Wert gesetzt. Dadurch werden Wertabweichungen durch Integrations-Offsets zyklisch korrigiert. Im darauf folgenden Schritt 2.2 findet eine konventionelle Ermittlung des Gierwinkels ψ_{K} durch Integration der vom Gierratensensor gelieferten Werte statt.

Im Schritt 3.1 wird der aktuelle Geschwindigkeitsvektorwinkel γ mit Hilfe der von einem System zur Positionsbestimmung gelieferten Daten ermittelt. Das Positions-Bestimmungssystems kann sowohl ein Satellitensender gestütztes, als auch ein mit terrestrischen Sendern arbeitendes oder auch ein aus beiden Möglichkeiten kombiniertes Positions-Bestimmungssystem sein.

Somit stehen alle für den weiteren Ablauf erforderlichen Werte am folgenden Knotenpunkt P1 des Verfahrensablaufs bereit. Im darauf folgenden Verzweigungsschritt 1.3 werden nun die im Schritt 1.1 ermittelten Schwimmwinkelkenngrößen K_{β} mit vorgegebenen Kenngrößen-Grenzwerten G_{β} verglichen.

Ergibt der Vergleich in Schritt 1.3, dass die Schwimmwinkelkenngrößen K_{β} über den Kenngrößen-Grenzwerten G_{β} liegen, so liegt ein kritischer Fahrzustand mit einem relativ großen, nicht vernachlässigbaren Schwimmwinkel (z. B. > 3°.) vor. In diesem Fall folgt im Verfahrensablauf der weitere Verzweigungsschritt 1.4, in dem überprüft wird, ob ein Wert für den Geschwindigkeitsvektorwinkel γ vorliegt. Möglicherweise konnte im Schritt 3.1 aufgrund eines fehlenden Signals (z. B. durch Satellitensignalabschattung)kein aktueller Geschwindigkeitsvektorwinkel γ ermittelt werden.

Liegt kein aktueller Geschwindigkeitsvektorwinkel γ vor, so wird in den Schritten 4.2 und 4.3 eine Extrapolation des Geschwindigkeitsvektorwinkels γₑₓₜ auf Basis von Werten aus vorhergehenden Durchläufen vorgenommen und der aktuelle Geschwindigkeitsvektorwinkel γ auf den extrapolierten Wert γₑₓₜ gesetzt. Somit liegt in dem auf Schritt 1.4, bei Vorhandensein eines aktuellen Geschwindigkeitsvektorwinkel γ, als auch auf den Schritt 4.3, nach Extrapolation des Geschwindigkeitsvektorwinkel γ, folgenden Knotenpunkt P2 ein aktualisierter Wert des Geschwindigkeitsvektorwinkels γ vor.

Im folgenden Schritt 1.5 wird nun der aktuelle Gierwinkel ψ auf den in Schritt 2.2 konventionell ermittelten Gierwinkelwert ψ_{K} gesetzt. Der aktuelle Schwimmwinkel β wird anschließend aus der Differenz zwischen dem aktuellen Gierwinkel ψ und dem aktuellen Geschwindigkeitsvektorwinkel γ bestimmt.

Ergibt der Vergleich in Schritt 1.3, dass die Schwimmwinkelkenngröße K_{β} unterhalb des Kenngrößen-Grenzwertes G_{β} liegen, so heißt dies, dass das Fahrzeug sich in einem stabilen Fahrzustand befindet und der Schwimmwinkel β mit großer Sicherheit vernachlässigbar ist.

In diesem Fall folgt in dem Verzweigungsschritt 4.1 die Überprüfung, ob ein aktueller Geschwindigkeitsvektorwinkel γ zur Verfügung steht. Ist dies nicht der Fall, so verzweigt der Ablauf zu Schritt 4.2 und die Ermittlung der aktuellen Werte für den Geschwindigkeitsvektorwinkel γ, den Gierwinkel ψ und den Schwimmwinkel β erfolgt wie zuvor beschrieben.

Wird in Schritt 4.1 jedoch festgestellt, dass ein aktueller Wert für den Geschwindigkeitsvektorwinkel γ vorliegt, so wird darauf folgend in Schritt 5.1 der Gierwinkel ψ auf den aktuellen Wert des Geschwindigkeitsvektorwinkels γ gesetzt. Der Schwimmwinkel β wird in diesem Fall im anschließenden Schritt 5.2 auf den in Schritt 1.2 konventionell ermittelten Wert β_{K} gesetzt, der bei kleinen Werten hinreichend genau ist.

Nach dem Durchlauf des Verfahrens innerhalb des Zeitintervalls ZI sind die aktuellen Winkelwerte auf jeweils vorteilhafte Weise ermittelt und der Ablauf kann erneut gestartet werden.

Fig. 3 zeigt eine Schemadarstellung einer erfindungsgemäßen Vorrichtung zur Berechnung von Fahrdynamikdaten FDR, im Weiteren auch als Fahrdynamikrechner FDR bezeichnet. Diese Vorrichtung stellt im Wesentlichen eine Recheneinheit dar, die zur Berechnung der gewünschten Werte auf externe Daten und Signale zurückgreift. Dazu steht der genannte Fahrdynamikrechner FDR mit mehreren Sensoreinheiten der Fahrzustands-Sensorik FZS in Verbindung. Beispielhaft sind in Fig. 3 folgende Sensoreinheiten als Bestandteil der Fahrzustands-Sensorik FZS dargestellt: Raddrehzahlsensoren RS für mehrere Räder, Beschleunigungssensoren AS für unterschiedliche Richtungen, Antriebsmomentsensoren DS und Bremsmomentsensoren BS für die Antriebsmomente bzw. Bremsmomente an mehreren Rädern, Lenkwinkelsensor LS, Federwegsensoren FS an mehreren Rädern, Nick-, Wank- und Gierratensensoren θS, ϕS und ψS.

Weiterhin steht der genannte Fahrdynamikrechner FDR mit einem System zur Positionsbestimmung PBS und weiteren Informationssystemen UIS zur Erfassung und ggf. Aufbereitung von Umgebungsinformationen in Verbindung. Diese Informationssysteme UIS sind in Fig. 3 in einem Block zusammengefasst dargestellt, können jedoch durchaus als getrennte Systemeinheiten ausgebildet sein. Solche Systeme können sein: Navigationssysteme, Kamerasysteme, Radarsysteme, funkgestützte Strecken-Informationssysteme und ähnliche Systeme zur Erfassung von Umweltdaten.

Der Fahrdynamikrechner FDR weist im Wesentlichen Funktions-einheiten zur Signalauswertung/Signalaufbereitung SE, zur Berechnung der Fahrdynamikdaten DR und zur Signalausgabe/Ansteuerung SA auf. Der Fahrdynamikrechner kann selbstverständlich weitere Funktionseinheiten, die in Fig. 3 nicht dargestellt sind, wie zum Beispiel auch integrierte Sensoreinheiten (Gyroskope), aufweisen.

Der erfindungsgemäße Verfahrensablauf wird durch ein entsprechendes auf dem Fahrdynamikrechner implementiertes Rechenprogramm mit dem Fahrdynamikrechner durchgeführt. Die errechneten Werte für die zu bestimmenden Winkel können direkt im Fahrdynamikrechner zum Beispiel zur Berechnung von Steuergrößen weiterbenutzt oder zur weiteren Verwertung auch an externe Funktionsmodule ausgegeben werden.

## Patentansprüche

1. Verfahren zur Bestimmung des aktuellen Gierwinkels (ψ) und des aktuellen Schwimmwinkels (β) eines Landfahrzeugs (LF) mit Hilfe einer Fahrzustands-Sensorik (FZS), einem Gierratensensor (GRS) sowie eines Positions-Bestimmungssystems (PBS) mit den Verfahrensschritten:
- Ermittlung mindestens einer Schwimmwinkelkenngröße (K_{β}) des Landfahrzeugs (LF) mit Hilfe von Sensor-Werten, die von der fahrzeuginternen Fahrzustands-Sensorik (FZS) und/oder dem Gierratensensor (GRS) bereitgestellt werden;
- Ermittlung eines aktuellen Geschwindigkeitsvektor-Winkels (γ), der als Winkel zwischen einem, mit Werten des Positions-Bestimmungssystems (PBS) ermittelten, Geschwindigkeitsvektor (V_{G}) des Landfahrzeugs (LF) und einer erdfesten Achse (X_{E}) ermittelt wird;
- Vergleichen der mindestens einen Schwimmwinkelkenngröße (K_{β}) mit mindestens einem festgelegten Kenngrößen-Grenzwert (G_{β}) ; wobei
- bei Unterschreitung des Kenngrößen-Grenzwertes (G_{β})
- der aktuelle Gierwinkel (ψ) auf den aktuellen Geschwindigkeitsvektor-Winkel (γ) abgeglichen wird, und
- der aktuelle Schwimmwinkel (β) mit Hilfe der Sensor-Werten, die von der fahrzeuginternen Fahrzustands-Sensorik (FZS) und/oder dem Gierratensensor (GRS) bereitgestellt werden, ermittelt wird;
- bei Überschreitung des Kenngrößen-Grenzwertes (G_{β})
- der aktuelle Gierwinkel (ψ) mit Hilfe von Sensor-Werten, die von dem Gierratensensor (GRS) durch laufende Werte-Integration auf Basis eines vorhergehenden Abgleichs auf den Geschwindigkeitsvektor-Winkel (γ) bereitgestellt werden, ermittelt wird, und
- der Schwimmwinkel (β)als Differenz zwischen dem so ermittelten Gierwinkel (ψ) des Landfahrzeugs und dem aktuellen Geschwindigkeitsvektor-Winkel (γ) ermittelt wird.

2. Verfahren nach Anspruch 1, **dadurch gekennzeichnet, dass** die Verfahrensschritte in festgelegten oder veränderlichen Zeitintervallen (ZI) wiederholt werden.

3. Verfahren nach Anspruch 1 oder 2, **dadurch gekennzeichnet, dass** sowohl ein statischer Kenngrößen-Grenzwert (G_{β}) als auch ein dynamischer Kenngrößen-Grenzwert (G_{β}), der das Anwachsen des Schwimmwinkels (β) kennzeichnet, festgelegt ist.

4. Verfahren nach einem der Ansprüche 1 bis 3, **dadurch gekennzeichnet, dass** mit Hilfe der Fahrzustands-Sensorik (FZS) zumindest je ein Wert zur Bestimmung zumindest einer Raddrehzahl und/oder einer Fahrzeug-Querbeschleunigung und/oder einer Fahrzeuglängsbeschleunigung ermittelt wird.

5. Verfahren nach einem der Ansprüche 1 bis 4, **dadurch gekennzeichnet, dass** mit Hilfe der Fahrzustands-Sensorik (FZS) zumindest je ein Wert zur Bestimmung eines Antriebsmomentes und/oder eines Bremsmomentes zumindest eines Rades des Landfahrzeugs ermittelt wird.

6. Verfahren nach einem der Ansprüche 1 bis 5, **dadurch gekennzeichnet, dass** mit Hilfe eines Algorithmus, aus den mit der Fahrzustands-Sensorik (FZS) ermittelten Werten, Kenngrößen für den Querschlupf und/oder den Längsschlupf sowie für die zumindest auf ein Rad wirkende Querkraft bzw. Längskraft als Grundlage zur Berechnung für die mindestens eine Schwimmwinkelkenngröße ermittelt werden.

7. Verfahren nach einem der Ansprüche 1 bis 6, **dadurch gekennzeichnet, dass** eine Offset-Korrektur für mindestens ein Beschleunigungssignal der Fahrzustands-Sensorik (FZS) mit Hilfe eines Filter-Algorithmus, insbesondere eines Kalmann-Filters (0.1)

8. Verfahren nach einem der Ansprüche 1 bis 7, **dadurch gekennzeichnet, dass** Daten, die aus zusätzlichen Umgebungsinformationen gewonnen werden, zur Offset-Korrektur mindestens eines Beschleunigungssignals herangezogen werden.

9. Vorrichtung zur Berechnung von Fahrdynamikdaten eines Landfahrzeugs eingerichtet zur Erfassung und Aufbereitung von Daten einer Fahrzustands-Sensorik (FZS), eines Gierratensensors (GRS) sowie eines Positions-Bestimmungssystems (PBS) und mit einer Recheneinheit, die Funktionseinheiten aufweist, wobei die Funktionseinheiten den aktuellen Gierwinkel (ψ) und den aktuellen Schwimmwinkel (β) des Landfahrzeugs (LF) gemäß dem Verfahren nach einem der vorherigen Ansprüche bestimmen.

## Claims

1. Method for determining the actual yaw angle (ψ) and the actual slip angle (β) of a land vehicle (LF) with the aid of a driving-state sensor system (FZS), a yaw rate sensor (GRS) and a position-determining system (PBS), having the method steps of:
- determining at least one slip angle characteristic (K_{β}) of the land vehicle (LF) with the aid of sensor values which are provided by the vehicle-internal driving-state sensor system (FZS) and/or the yaw rate sensor (GRS);
- determining an actual velocity vector angle (γ), which is determined as the angle between a velocity vector (V_{G}) of the land vehicle (LF) determined with values of the position-determining system (PBS), and an earth-fixed axis (X_{E});
- comparing the at least one slip angle characteristic (K_{β}) with at least one defined characteristic limit value (G_{β}); in which
- upon undershooting of the characteristic limit value (G_{β}),
- the actual yaw angle (ψ) is adjusted to the actual velocity vector angle (γ), and
- the actual slip angle (β) is determined with the aid of the sensor values which are provided by the vehicle-internal driving-state sensor system (FZS) and/or the yaw rate sensor (GRS);
- upon overshooting of the characteristic limit value (G_{β}),
- the actual yaw angle (ψ) is determined with the aid of sensor values which are provided by the yaw rate sensor (GRS) by continuous value integration on the basis of a previous adjustment to the velocity vector angle (γ), and
- the slip angle (β) is determined as the difference between the yaw angle (ψ) thus determined for the land vehicle and the actual velocity vector angle (γ).

2. Method according to Claim 1, **characterized in that** the method steps are repeated at set or variable time intervals (ZI).

3. Method according to Claim 1 or 2, **characterized in that** both a static characteristic limit value (G_{β}) and a dynamic characteristic limit value (G_{β}) which characterizes the growth of the slip angle (β) are defined.

4. Method according to one of Claims 1 to 3, **characterized in that** the driving-state sensor system (FZS) is used to determine at least one value each for determining at least a wheel speed and/or a vehicle lateral acceleration and/or a vehicle longitudinal acceleration.

5. Method according to one of Claims 1 to 4, **characterized in that** the driving-state sensor system (FZS) is used to determine one value each for determining a driving torque and/or a braking torque of at least one wheel of the land vehicle.

6. Method according to one of Claims 1 to 5, **characterized in that** with the aid of an algorithm the values determined with the vehicle-state sensor system (FZS) are used to determine characteristics for the lateral slip and/or the longitudinal slip, and for the lateral force and/or the longitudinal force acting on at least one wheel as a basis for calculating the at least one slip angle characteristic.

7. Method according to one of Claims 1 to 6, **characterized in that** an offset correction is carried out for at least one acceleration signal of the driving-state sensor system (FZS) with the aid of a filter algorithm, in particular a Kalmann filter (0.1).

8. Method according to one of Claims 1 to 7, **characterized in that** data obtained from additional environmental information are used for the offset correction of at least one acceleration signal.

9. Device for calculating vehicle-dynamics data of a land vehicle, which device is set up to detect and condition data from a driving-state sensor system (FZS), a yaw rate sensor (GRS) and a position-determining system (PBS) and has an arithmetic-logic unit with function units, the function units determining the actual yaw angle (ψ) and the actual slip angle (β) of the land vehicle (LF) in accordance with the method according to one of the previous claims.

## Revendications

1. Procédé de détermination de l'angle de lacet actuel (ψ) et de l'angle de flottement actuel (β) d'un véhicule terrestre (LF) à l'aide d'un système de capteur d'état de conduite (FSZ), d'un capteur de taux de lacet (GRS) ainsi que d'un système de détermination de position (PBS), comprenant les étapes consistant à :
- déterminer au moins une grandeur caractéristique d'angle de flottement (K_{β}) du véhicule terrestre (LF) à l'aide de valeurs de capteur, lesquelles sont mises à disposition par le système de capteur d'état de conduite (FZS) interne au véhicule et/ou par le capteur de taux de lacet (GRS) ;
- déterminer un angle du vecteur de vitesse actuel (γ), qui est déterminé comme angle entre un vecteur de vitesse (V_{G}) du véhicule terrestre (LF) déterminé avec des valeurs du système de détermination de position (PBS) et un axe lié au sol (X_{E}) ;
- comparer la au moins une grandeur caractéristique d'angle de flottement (K_{β}) à au moins une valeur limite de grandeur caractéristique définie (G_{β}) ; dans lequel :
- lors du passage en-dessous de la valeur limite (G_{β}) de la grandeur caractéristique,
- l'angle de lacet actuel (ψ) est aligné sur l'angle de vecteur de vitesse actuel (γ),
- l'angle de flottement actuel (β) est déterminé à l'aide des valeurs de capteur qui sont mises à disposition par le système de capteur d'état de conduite (FZS) interne au véhicule et/ou le capteur de taux de lacet (GRS) ;
- lors du dépassement de la valeur limite (G_{β}) de la grandeur caractéristique,
- l'angle de lacet actuel (ψ) est déterminé à l'aide de valeurs de capteur, qui sont mises à disposition par le capteur de taux de lacet (GRS) moyennant une intégration continue des valeurs sur la base d'un alignement préalable sur l'angle du vecteur de vitesse (γ), et
- l'angle de flottement (β) est déterminé comme la différence entre l'angle de lacet (ψ) du véhicule terrestre ainsi déterminé et l'angle de vecteur de vitesse actuel (γ).

2. Procédé selon la revendication 1, **caractérisé en ce que** les étapes du procédé sont répétées à intervalles de temps définis ou variables (ZI).

3. Procédé selon la revendication 1 ou 2, **caractérisé en ce que** l'on définit aussi bien une valeur limite de grandeur caractéristique statique (G_{β}) qu'une valeur limite de grandeur caractéristique dynamique (G_{β}) , qui caractérise l'accroissement de l'angle de flottement (β).

4. Procédé selon l'une quelconque des revendications 1 à 3, **caractérisé en ce que**, à l'aide du système de capteur d'état de conduite (FZS), on détermine respectivement au moins une valeur pour déterminer au moins un nombre de tours de roue et/ou une accélération transversale du véhicule et/ou une accélération longitudinale du véhicule.

5. Procédé selon l'une quelconque des revendications 1 à 4, **caractérisé en ce que**, à l'aide du système de capteur d'état de conduite (FZS), on détermine respectivement au moins une valeur pour déterminer un couple d'entraînement et/ou un couple de freinage d'au moins une roue du véhicule terrestre.

6. Procédé selon l'une quelconque des revendications 1 à 5, **caractérisé en ce que**, à l'aide d'un algorithme, on détermine, à partir des valeurs déterminées avec le système de capteur d'état de conduite (FZS), des grandeurs caractéristiques pour le glissement transversal et/ou pour le glissement longitudinal ainsi que pour la au moins une force transversale ou force longitudinale s'exerçant sur une roue comme base pour le calcul de la au moins une grandeur caractéristique de l'angle de flottement.

7. Procédé selon l'une quelconque des revendications 1 à 6, **caractérisé en ce que** l'on effectue une correction d'offset pour au moins un signal d'accélération du système de capteur d'état de conduite (FZS) à l'aide d'un algorithme de filtrage, en particulier d'un filtre de Kalmann (0.1).

8. Procédé selon l'une quelconque des revendications 1 à 7, **caractérisé en ce que** des données, qui sont obtenues à partir d'informations d'environnement supplémentaires, sont mises à contribution pour la correction d'offset d'au moins un signal d'accélération.

9. Dispositif pour calculer des données de dynamique de conduite d'un véhicule terrestre équipé pour capter et traiter des données d'un système de capteur d'état de conduite (FZS), d'un capteur de taux de lacet (GRS) ainsi que d'un système de détermination de position (PBS) et doté d'une unité de calcul présentant des unités fonctionnelles, dans lequel les unités fonctionnelles déterminent l'angle de lacet actuel (ψ) et l'angle de flottement actuel (β) du véhicule terrestre (LF) d'après le procédé selon l'une quelconque des revendications précédentes.
